# EUROPEAN PATENT SPECIFICATION

(11) **EP 4 026 512 B1**
(45) Date of publication and mention of the grant of the patent: **26.03.2025**
(21) Application number: 20876719.4
(22) Date of filing: 13.04.2020
(51) Int. Cl.: A61C 5/50, A61C 3/00, A61C 19/04

(54) **NOVEL GUTTA PERCHA POINT TRIMMER**
NEUARTIGE GUTTA-PERCHA-PUNKTTRIMMER
NOUVEAU POINT DE DISPOSITIF DE COUPE DE GUTTA-PERCHA

(30) Priority: 18.10.2019 CN 201910992680
(43) Date of publication of application: 13.07.2022
(73) Proprietor: Guilin Woodpecker Medical Instrument Co., Ltd., Guilin, Guangxi 541004 (CN)
(72) Inventor: WU, Xunxian, Guilin, Guangxi 541004 (CN); WALID, Nehme, Guilin, Guangxi 541004 (CN); WEI, Fengwen, Guilin, Guangxi 541004 (CN); XU, Jiabin, Guilin, Guangxi 541004 (CN); WU, Kunyou, Guilin, Guangxi 541004 (CN)
(74) Representative: Chung, Hoi Kan
(86) International application number: PCT/CN2020/084414
(87) International publication number: WO 2021/073059

(56) References cited:
- WO-A1-2012/044194
- CN-A- 110 680 522
- CN-U- 206 809 348
- CN-U- 207 721 914
- GB-A- 2 021 270

## Description

### Technical Field

The present invention relates to the field of oral medical apparatus, in particular to a gutta-percha point trimmer.

### Background Art

During the root canal therapy, densely three-dimensional filling shall be performed for the root canal to be cleaned and preformed to eliminate dead space and prevent external bacteria and pollutants from being infiltrated, thereby preventing the root canal system from being reinfected. Among modern root canal filling techniques, the gutta-percha point is the most widely used and mainstream root canal filling material. Before filling, it is necessary to select an appropriate gutta-percha point according to working length of the patient's root canal and the dimensions of prepared root canal, and then trim it to cut off unnecessary parts.

During the root canal filling, an ideal filling stop shall be the same as the prepared stop of the root canal, which is generally located at physiological apical foramen or the narrowest part of the root apex. In case of over-filling or under-filling, the effect of the root canal therapy will be affected. In case of over-filling, bacteria and other infectious substances will be pushed into the apical foramen, causing the periapical periodontitis. In addition, the root canal filling material can cause foreign body reaction or toxic irritation in the periapical tissue. In case of under-filling, periapical tissue fluid and exudate will return to the unfilled root canal, and the decomposition and reproduction of the exudate lead to re-infection and failure of root canal therapy. Therefore, it is very important to determine length and taper of the gutta-percha point before the root canal filling.

At present, there are many types of trimming tools of the gutta-percha point, involving various structural types, such as push-in type, press type, rotation type, etc., but the using effects are not satisfactory, resulting in a poor user experience.

For example, CN 207 721 914 U discloses a gutta-percha point trimmer, comprising a base and a sliding block element, wherein the base is provided with at least one guide rail and the locating holes of various specifications passing through the base, the sliding block element comprises a sliding block and blades, the sliding block is in clearance fit with the base, the sliding block slides along the base, the sliding block is provided with a counterbore and at least one sliding chute, the sliding chute is in clearance fit with the guide rail, and each of the blades is fixedly connected to the sliding block.

GB 2 021 270 A provides a dental device for measuring a root canal filler. The gutta-percha point trimmer described in the independent claim introduces several innovations compared to the device in GB 2 021 270 A2. It features a unique guide rail and locating holes of various specifications for precise trimming of gutta-percha points, essential for root canal treatments. Unlike the original device's focus on manual adjustment and cutting with potential safety concerns, this invention utilizes a sliding block element with blades, enhancing precision and safety. This design allows for the accurate adjustment of gutta-percha points to specific sizes, addressing the efficiency and precision shortcomings of the prior art. The novel mechanism ensures safer operation, minimizing blade exposure, and simplifies the process of preparing gutta-percha points, thus improving treatment efficiency. These improvements solve key issues of inefficiency, lack of precision, and safety in the existing technology, marking a significant advancement in dental treatment tools.

### Summary of the Invention

The purpose of the present invention is to provide a gutta-percha point trimmer, which aims to solve the technical problems of unsatisfactory using effect and poor user experience of the gutta-percha point trimmer in the prior art.

In order to achieve the above-mentioned purpose, a gutta-percha point trimmer used in the present invention comprises a base, a sliding block element and a stop block, wherein the base is provided with at least one guide rail, and the locating holes of various specifications passing through each of the guide rails and the base, the sliding block element comprises a sliding block and blades, the sliding block is in clearance fit with the base, the sliding block slides along the base, the sliding block is provided with a counterbore and at least one sliding chute, the sliding chute is in clearance fit with the guide rail, the number of the blades is at least two, each of the blades is fixedly connected to the sliding block, and is located inside each of the sliding chutes, each of the sliding chutes is provided with two blades arranged symmetrically along the length extension direction of the guide rail, the stop block is fixedly connected to the base, and is located at both ends of the length extension direction of the base.

Wherein, each of the said locating holes is provided with a guide chamber and a measuring chamber, wherein the guide chamber is a cylindrical chamber, and the measuring chamber is a tapered chamber.

Wherein, each of the said blades is made of stainless steel, with a thickness of 0.1mm~0.2mm.

Wherein, the said sliding block is provided with an X-shaped chute, each of the said blades is fixedly connected to the chute, the side of the cutting edge of each of the blades fits closer to the horizontal plane of the guide rail, and forms an intersection angle of 25° with the horizontal plane of the guide rail.

Wherein, one end of the said sliding block far away from the guide rail is arranged in a concave arc structure.

Wherein, the said sliding block element comprises an elastic element and a resisting element, wherein one end of the elastic element is fixedly connected to the sliding block, the other end of the elastic element is fixedly connected to the resisting element, and the elastic element and the resisting element are located inside the counterbore.

Wherein, the outer wall of the said base is provided with the aperture marks and the scale chutes, wherein the aperture marks are located at one side of the locating hole, each of the locating holes corresponds to one aperture mark, and the scale chutes are respectively located at one side of each of the guide rail.

Wherein, the said base is provided with the guide rail, the sliding block is provided with the sliding chute, the sliding chute is obliquely provided with the two blades, the sliding chute is in clearance fit with the guide rail, and the locating holes of various specifications are arranged in a row along the length extension direction of the base.

Wherein, the said base is provided with the guide rail, the sliding block is provided with the sliding chute, the sliding chute is obliquely provided with the two blades, the sliding chute is in clearance fit with the guide rail, the locating holes of various specifications are divided into two sets, the two sets of the locating holes are respectively arranged at both ends of the base, the two sets of the locating holes are arranged in a row along the length extension direction of the base, and a clearance is reserved between the two sets of the locating holes.

Wherein, the said base is provided with the two guide rails, the sliding block is provided with the two sliding chutes, each of the sliding chutes is obliquely provided with the two blades, each of the sliding chutes is in clearance fit with corresponding each of the guide rails, the locating holes of various specifications are divided into two sets, the two sets of the locating holes are arranged side by side along the width extension direction of the base.

The beneficial effect of a gutta-percha point trimmer of the present invention is embodied in the following: Dentist selects a gutta-percha point to be trimmed, determines dimensions of section to be trimmed, rotates the gutta-percha point into the locating hole of corresponding specification, and then pushes a sliding block by hands. The sliding block slides on the base. The blades cut off the excess part of the gutta-percha point, and trim the gutta-percha point to the required dimensions. The gutta-percha point trimmer is characterized by simple operation and high efficiency. The locating holes of various specifications can guarantee accurate dimensions of cutting section of the gutta-percha point. Moreover, the blades are symmetrically arranged in the sliding chute. On the one hand, the blades can cut in both directions along the base at will. On the other hand, the unexposed cutting edges of the blades are safer and more reliable; moreover, the plane of the guide rail **11** protrudes from that of the base 10 to achieve separate height increase; the gutta-percha point is cut on the guide rail, which can reduce unnecessary contact area of the blades upon cutting, and can make the blades fit closer on the guide rail, thereby improving the using effect of the gutta-percha point trimmer with the better user experience.

### Brief Description of the Drawings

In order to explain the embodiments of the present invention or the technical solutions in the prior art more clearly, the following will briefly introduce the drawings that need to be used in the description of the embodiments or the prior art. Obviously, the drawings in the following description are only some embodiments of the present invention. For those of ordinary skill in the art, other drawings can be obtained based on these drawings without creative work.
Fig. 1 is a structure diagram of the gutta-percha point trimmer of the present invention.
Fig. 2 is a bottom structure diagram of the gutta-percha point trimmer of the present invention.
Fig. 3 is a structure diagram of the gutta-percha point trimmer of the present invention.
Fig. 4 is a bottom structure diagram of the gutta-percha point trimmer of the present invention.
Fig. 5 is an overall structure diagram for the sliding block elements of the present invention.
Fig. 6 is an inner structure diagram for the sliding block elements the present invention.
Fig. 7 is a structure diagram of the gutta-percha point trimmer of the present invention.
Fig. 8 is a bottom structure diagram of the gutta-percha point trimmer of the present invention.
Fig. 9 is an overall structure diagram for the sliding block elements of the present invention.
Fig. 10 is an inner structure diagram for the sliding block elements of the present invention.
Fig. 11 is an inner structure diagram for the locating holes of various specifications of the present invention.
100 gutta-percha point trimmer, 10-base, 11-guide rail, 12-locating hole, 121-guide chamber, 122-measuring chamber, 13-aperture mark, 14-scale chute, 20-sliding block element, 21-sliding block, 211-counterbore, 212-sliding chute, 213-chute, 22-blade, 23-elastic element, 24-resisting element, 30-stop block.

### Detailed Description

The embodiments of the present invention are described in detail below. Examples of the embodiments are shown in the drawings, wherein the same or similar mark number indicates the same or similar elements or elements with the same or similar functions. The embodiments described below with reference to the drawings are merely exemplary, and are intended to explain the present invention, but shall not be construed as limiting the present invention.

In the description of the present invention, it shall be understood that direction or location relations indicated by the terms "length", "width", "upper", "lower", "front", "rear", "left", "right", "vertical", "horizontal", "top", "bottom", "inner", "outer", etc. are based on direction or location relations shown in the drawings, and are only for the convenience of describing the present invention and simplifying the description, but not for indicating or implying that device or element shall have a specific direction, and be constructed and operated in a specific direction, and therefore shall not be construed as limiting the present invention. In addition, in the description of the present invention, "plurality" means two or more, unless otherwise specifically defined.

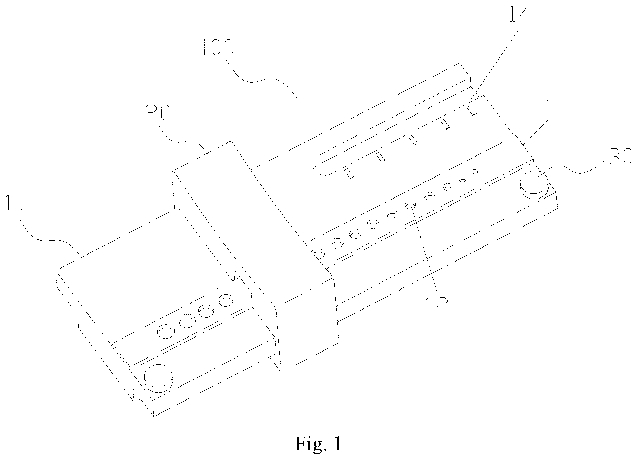

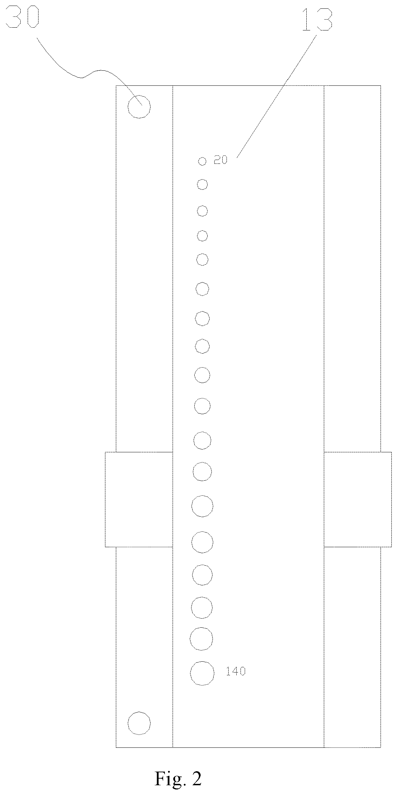

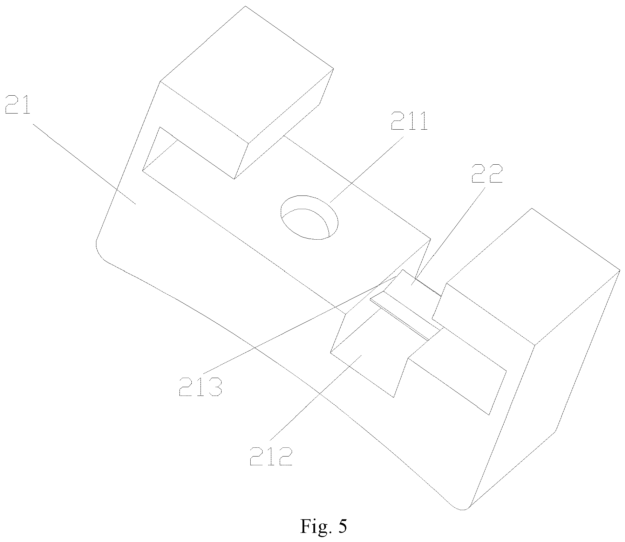

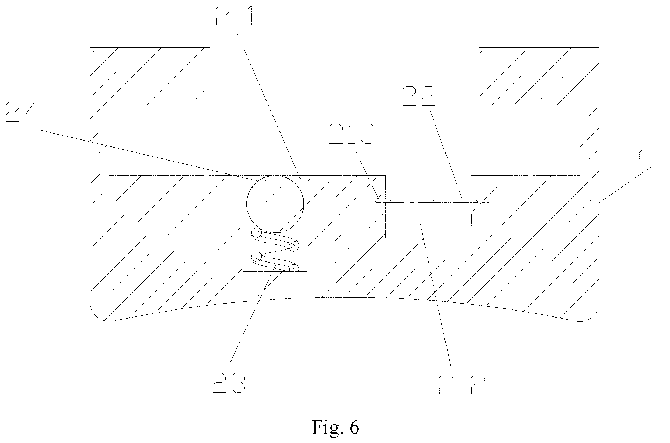

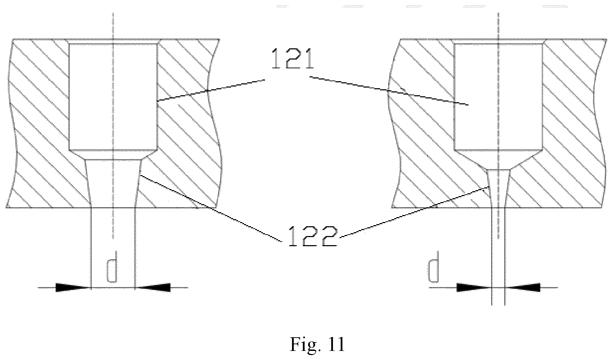

Please refer to Fig. 1, Fig. 2, Fig. 5, Fig. 6 and Fig. 11. The present invention provides a gutta-percha point trimmer 100, comprising a base 10, a sliding block element 20 and a stop block 30, wherein the base 10 is provided with at least one guide rail 11 and the locating holes 12 of various specifications passing through each of the guide rails 11 and the base 10, the sliding block element 20 comprises a sliding block 21 and blades 22, the sliding block 21 is in clearance fit with the base 10, the sliding block 21 slides along the base 10, the sliding block 21 is provided with a counterbore 211 and at least one sliding chute 212, the sliding chute 212 is in clearance fit with the guide rail 11, the number of the blades 22 is at least two, each of the blades 22 is fixedly connected to the sliding block 21, and is located inside each of the sliding chutes 212, each of the sliding chutes 212 is provided with two blades 22, each of the sliding chutes is provided with two blades, the two blades 22 are symmetrically arranged along the length extension direction of the guide rail 11, the stop block 30 is fixedly connected to the base 10, and is located at both ends of the length extension direction of the base 10.

Further, each of the said locating holes 12 is provided with the guide chamber 121 and the measuring chamber 122, wherein the guide chamber 121 is a cylindrical chamber, and the measuring chamber 122 is a tapered chamber.

Further, each of the said blades 22 is made of stainless steel, with a thickness of 0.1mm~0.2mm.

Further, the said sliding block 21 is provided with an X-shaped chute 213, each of the blades 22 is fixedly connected to the chute 213, and the side of the cutting edge of each of the blades 22 fits closer to the horizontal plane of the guide rail 11, and forms an intersection angle of 25° with the horizontal plane of the guide rail 11.

Further, one end of the said sliding block 21 far away from the guide rail 11 is arranged in a concave arc structure.

Further, the said sliding block element 20 comprises an elastic element 23 and a resisting element 24, wherein one end of the elastic element 23 is fixedly connected to the sliding block 21, the other end of the elastic element 23 is fixedly connected to the resisting element 24, and the elastic element 23 and the resisting element 24 are located inside the counterbore 211.

Further, the outer wall of the said base 10 is provided with the aperture marks 13 and the scale chutes 14, wherein the aperture marks 13 are located at one side of the locating hole 12, each of the locating holes 12 corresponds to one aperture mark 13, and the scale chutes 14 are respectively located at one side of each of the guide rails 11.

Further, the said base 10 is provided with the guide rail 11, the sliding block 21 is provided with the sliding chute 212, the sliding chute 212 is obliquely provided with the two blades 22, the sliding chute 212 is in clearance fit with the guide rail 11, and the locating holes 12 of various specifications are arranged in a row along the length extension direction of the base 10.

In this implementation mode, the said base 10 is provided with the guide rail 11, the sliding block 21 is provided with the sliding chute 212, the sliding chute 212 is obliquely provided with the two blades 22, the sliding chute 212 is in clearance fit with the guide rail 11, and the locating holes 12 of various specifications are arranged in a row along the length extension direction of the base 10. Dentist selects a gutta-percha point to be trimmed, determines dimensions of section to be trimmed, and rotates the gutta-percha point into the locating hole 12 of corresponding specification, wherein the locating hole 12 has 18 specifications, "20" "25", "30", "35", "40", "45", "50", "55", "60", "65", "70", "80", "90", "100", "110", "120", "130" and "140", which can basically meet the requirements for trimming the gutta-percha points of all specifications. Medical and nursing staff can visually determine the specification of the locating hole 12 by observing the aperture mark 13 on the side of the locating hole 12, and then determine whether to insert the gutta-percha point into the locating hole 12 of such specification. Each of the locating holes 12 is provided with the guide chamber 121 and the measuring chamber 122, wherein the guide chamber 121 is a cylindrical chamber, and the measuring chamber 122 is a tapered chamber. For example: the aperture marks 13 are "20" and "25", indicating the size of the diameter d of the measuring chamber 122 on the bottom surface; in terms of quantity, the aperture mark 13 is equal to 100 multiplied by the diameter d, namely, "20" indicates that d is equal to 0.2mm and "25" indicates that d is equal to 0.25mm. Due to processing difficulty of most gutta-percha point trimmers on the market, the measuring chamber 122 is the thin cylindrical chamber rather than the tapered chamber. However, all the gutta-percha points are tapered. If the measuring chamber 122 is a cylindrical chamber, upon trimming by inserting into the measuring chamber 122, actually cut section diameter is smaller than theoretically trimmed section diameter. There exists an inevitable error. The measuring chamber 122 of the present invention is machined by a custom-made profiling tool with accurate dimensions and high precision, which can ensure accurate dimensions of cutting section.

After the gutta-percha point is inserted into the said locating hole 12 of corresponding specification, the said sliding block 21 is pushed by hands, so that the sliding block 21 slides on the base 10, the two blades 22 arranged symmetrically on the sliding chute 212 cut off the excess part of the gutta-percha point, and trim the gutta-percha point to the required dimensions, wherein the blades 22, made of stainless steel blades, have a thickness of 0.1mm~0.2mm, and the preferred blades 22 have a thickness of 0.1mm; the blades 22 is extremely sharp, with high hardness and wear resistance. In addition, since the sliding block 21 is provided with an X-shaped chute 213, each of the blades 22 is fixedly connected to the chute 213 by anaerobic adhesive. The anaerobic adhesive can withstand a high temperature of more than 200 degrees; therefore, the gutta-percha point trimmer can be sterilized at high temperature. The side of the cutting edge of each of the blades 22 fits closer to the horizontal plane of the guide rail 11, and forms an intersection angle of 25° with the horizontal plane of the guide rail 11. The plane of the guide rail 11 protrudes from that of the base 10 to achieve separate height increase. The gutta-percha point is cut on the guide rail 11, which can reduce unnecessary contact area of the blades 22 upon cutting, and can make the blades 22 fit closer on the guide rail 11; therefore, the blades 22 can cut off (equivalent to shoveling off) the exposed gutta-percha point along the bottom surface of the locating hole 12 upon working, and the cutting section is very flat. The blade 22 is very thin and sharp; therefore, the gutta-percha point cannot be crushed during cutting, and the cutting section is still round. The two symmetrically-arranged blades 22 can cut, no matter which direction the sliding block 21 moves towards. Moreover, the unexposed cutting edges of the blades 22 are safer and more reliable; the stop block 30 is a limit screw, which can limit the movement of the sliding block 21 to prevent the sliding block 21 from sliding away from the base 10.

By arranging one end of the said sliding block 21 far away from the guide rail 11 in a concave arc structure, the dentist can feel more comfortable and reliable when pressing and moving the sliding block 21. The elastic element 23 is a compressed spring. The resisting element 24 is the steel ball. The sliding block 21 is in clearance fit with the base 10. Upon designing, a small compressed spring can be used in pretightening with the steel ball. The compressed spring is placed into the counterbore 211 on the sliding block 21. The steel ball is placed on the compressed spring. The compression amount of the compressed spring, that is, pretightening force, is determined by the depth of the counterbore 211. After the sliding block 21 is installed on the base 10, the compressed spring and the steel ball are confined in the counterbore 211 of the sliding block 21, and the steel ball is pressed against the plane of the base 10 under the action of the compressed spring. Of course, due to small compression amount of the compressed spring, the pretightening force is very small, which only ensures that the sliding block 21 cannot slide freely on the base 10, without affecting smoothness of movement during work. When the length of the gutta-percha point needs to be measured, the gutta-percha point shall be placed inside the scale chute 14. The length of the gutta-percha point can be easily measured through the scale chute 14 on the base 10.

The said base 10 and the said sliding block 21 are made of aluminum alloy material and have been oxidized. The gutta-percha point trimmer 100, solid and durable, can be sterilized at high temperature. Moreover, it is characterized by light weight, multiple colors and handsome appearance. The entire gutta-percha point trimmer, compact and lightweight, can be operated with one hand; therefore, it is simple and convenient in use. Only one person can complete the trimming of the gutta-percha point, which greatly improves work efficiency.

According to the above description, the using effect of the gutta-percha point trimmer 100 gets improved, with the better user experience.

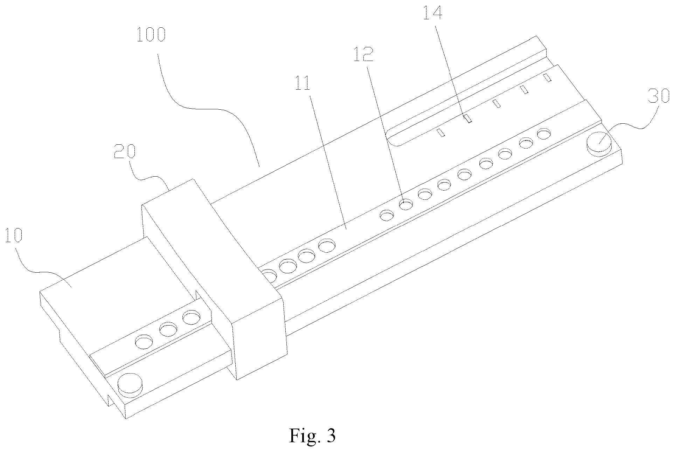

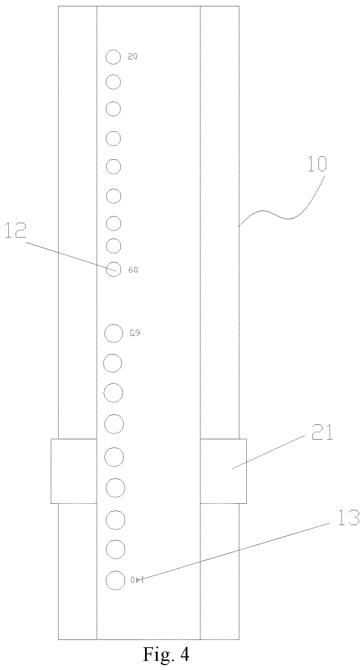

Please refer to Fig. 3, Fig. 4, Fig. 5, Fig. 6 and Fig. 11. It provides a gutta-percha point trimmer 100, comprising a base 10, a sliding block element 20 and a stop block 30, wherein the base 10 is provided with at least one guide rail 11 and the locating holes 12 of various specifications passing through each of the guide rails 11 and the base 10, the sliding block element 20 comprises a sliding block 21 and blades 22, the sliding block 21 is in clearance fit with the base 10, the sliding block 21 slides along the base 10, the sliding block 21 is provided with a counterbore 211 and at least one sliding chute 212, the sliding chute 212 is in clearance fit with the guide rail 11, the number of the blades 22 is at least two, each of the blades 22 is fixedly connected to the sliding block 21, and is located inside each of the sliding chutes 212, each of the sliding chutes 212 is provided with two blades 22, each of the sliding chutes is provided with two blades, the two blades 22 are symmetrically arranged along the length extension direction of the guide rail 11, the stop block 30 is fixedly connected to the base 10, and is located at both ends of the length extension direction of the base 10.

Further, each of the said locating holes 12 is provided with the guide chamber 121 and the measuring chamber 122, wherein the guide chamber 121 is a cylindrical chamber, and the measuring chamber 122 is a tapered chamber.

Further, each of the said blades 22 is made of stainless steel, with a thickness of 0.1mm~0.2mm.

Further, the said sliding block 21 is provided with an X-shaped chute 213, each of the blades 22 is fixedly connected to the chute 213, and the side of the cutting edge of each of the blades 22 fits closer to the horizontal plane of the guide rail 11, and forms an intersection angle of 25° with the horizontal plane of the guide rail 11.

Further, one end of the said sliding block 21 far away from the guide rail 11 is arranged in a concave arc structure.

Further, the said sliding block element 20 comprises an elastic element 23 and a resisting element 24, wherein one end of the elastic element 23 is fixedly connected to the sliding block 21, the other end of the elastic element 23 is fixedly connected to the resisting element 24, and the elastic element 23 and the resisting element 24 are located inside the counterbore 211.

Further, the outer wall of the said base 10 is provided with the aperture marks 13 and the scale chutes 14, wherein the aperture marks 13 are located at one side of the locating hole 12, each of the locating holes 12 corresponds to one aperture mark 13, and the scale chutes 14 are respectively located at one side of each of the guide rails 11.

Further, the said base 10 is provided with the guide rail 11, the sliding block 21 is provided with the sliding chute 212, the sliding chute 212 is obliquely provided with the two blades 22, the sliding chute 212 is in clearance fit with the guide rail 11, the locating holes 12 of various specifications are divided into two sets, the two sets of the locating holes 12 are respectively arranged at the both ends of the base 10, the two sets of the locating holes 12 are arranged in a row along the length extension direction of the base 10, and a clearance between the two sets of the locating holes 12 is reserved.

In this implementation mode, dentist selects a gutta-percha point to be trimmed, determines dimensions of section to be trimmed, rotates the gutta-percha point into the locating hole 12 of corresponding specification, wherein the locating hole 12 has 18 specifications, "20" "25", "30", "35", "40", "45", "50", "55", "60", "65", "70", "80", "90", "100", "110", "120", "130" and "140", which can basically meet the requirements for trimming the gutta-percha points of all specifications. Medical and nursing staff can visually determine the specification of the locating hole 12 by observing the aperture mark 13 on the side of the locating hole 12, and then determine whether to insert the gutta-percha point into the locating hole 12 of such specification. Each of the locating holes 12 is provided with the guide chamber 121 and the measuring chamber 122, wherein the guide chamber 121 is a cylindrical chamber, and the measuring chamber 122 is a tapered chamber. For example: the aperture marks 13 are "20" and "25", indicating the size of the diameter d of the measuring chamber 122 on the bottom surface; in terms of quantity, the aperture mark 13 is equal to 100 multiplied by the diameter d, namely, "20" indicates that d is equal to 0.2mm and "25" indicates that d is equal to 0.25mm. Due to processing difficulty of most gutta-percha point trimmers on the market, the measuring chamber 122 is the thin cylindrical chamber rather than the tapered chamber. However, all the gutta-percha points are tapered. If the measuring chamber 122 is a cylindrical chamber, upon trimming by inserting into the measuring chamber 122, actually cut section diameter is smaller than theoretically trimmed section diameter. There exists an inevitable error. The measuring chamber 122 of the present invention is machined by a custom-made profiling tool with accurate dimensions and high precision, which can ensure accurate dimensions of cutting section.

After the gutta-percha point is inserted into the locating hole 12 of corresponding specification, the sliding block 21 is pushed by hands, so that the sliding block 21 slides on the base 10, the two blades 22 arranged symmetrically on the sliding chute 212 cut off the excess part of the gutta-percha point, and trim the gutta-percha point to the required dimensions, wherein the blades 22, made of stainless steel blades, have a thickness of 0.1mm~0.2mm, and the preferred blades 22 have a thickness of 0.1mm; the blades 22 is extremely sharp, with high hardness and wear resistance. In addition, since the sliding block 21 is provided with an X-shaped chute 213, each of the blades 22 is fixedly connected to the chute 213 by anaerobic adhesive. The anaerobic adhesive can withstand a high temperature of more than 200 degrees; therefore, the gutta-percha point trimmer can be sterilized at high temperature. The side of the cutting edge of each of the blades 22 fits closer to the horizontal plane of the guide rail 11, and forms an intersection angle of 25° with the horizontal plane of the guide rail 11. The plane of the guide rail 11 protrudes from that of the base 10 to achieve separate height increase. The gutta-percha point is cut on the guide rail 11, which can reduce unnecessary contact area of the blades 22 upon cutting, and can make the blades 22 fit closer on the guide rail 11; therefore, the blades 22 can cut off (equivalent to shoveling off) the exposed gutta-percha point along the bottom surface of the locating hole 12 upon working, and the cutting section is very flat. The blade 22 is very thin and sharp; therefore, the gutta-percha point cannot be crushed during cutting, and the cutting section is still round. The two symmetrically-arranged blades 22 can cut, no matter which direction the sliding block 21 moves towards. Moreover, the unexposed cutting edges of the blades 22 are safer and more reliable; the stop block 30 is a limit screw, which can limit the movement of the sliding block 21 to prevent the sliding block 21 from sliding away from the base 10.

By arranging one end of the said sliding block 21 far away from the guide rail 11 in a concave arc structure, the dentist can feel more comfortable and reliable when pressing and moving the sliding block 21. The elastic element 23 is a compressed spring. The resisting element 24 is the steel ball. The sliding block 21 is in clearance fit with the base 10. Upon designing, a small compressed spring can be used in pretightening with the steel ball. The compressed spring is placed into the counterbore 211 on the sliding block 21. The steel ball is placed on the compressed spring. The compression amount of the compressed spring, that is, pretightening force, is determined by the depth of the counterbore 211. After the sliding block 21 is installed on the base 10, the compressed spring and the steel ball are confined in the counterbore 211 of the sliding block 21, and the steel ball is pressed against the plane of the base 10 under the action of the compressed spring. Of course, due to small compression amount of the compressed spring, the pretightening force is very small, which only ensures that the sliding block 21 cannot slide freely on the base 10, without affecting smoothness of movement during work. When the length of the gutta-percha point needs to be measured, the gutta-percha point shall be placed inside the scale chute 14. The length of the gutta-percha point can be easily measured through the scale chute 14 on the base 10.

The said base 10 and the sliding block 21 are made of aluminum alloy material and have been oxidized. The gutta-percha point trimmer 100, solid and durable, can be sterilized at high temperature. Moreover, it is characterized by light weight, multiple colors and handsome appearance. The entire gutta-percha point trimmer, compact and lightweight, can be operated with one hand; therefore, it is simple and convenient in use. Only one person can complete the trimming of the gutta-percha point, which greatly improves work efficiency.

The said base 10 is provided with the guide rail 11, the sliding block 21 is provided with the sliding chute 212, the sliding chute 212 is obliquely provided with the two blades 22, the sliding chute 212 is in clearance fit with the guide rail 11, the locating holes 12 of various specifications are divided into two sets, the two sets of the locating holes 12 are respectively arranged at the both ends of the base 10, the two sets of the locating holes 12 are arranged in a row along the length extension direction of the base 10, and a clearance between the two sets of the locating holes 12 is reserved. As a result, the differences between the structure of the gutta-percha point trimmer 100 of the embodiment 2 and the structure of the gutta-percha point trimmer 100 of the embodiment 1 are as follows: the bases 10 are different, and the remaining structures are the same; the base 10 of the embodiment 2 is longer than that of the embodiment 1; the middle is emptied by dividing the locating holes 12 of 18 different specifications into two sets equally, and processing them on the both ends of the base 10 respectively. The advantage of the above design is that the gutta-percha point trimmer can be held enough portion in one hand firmly, and reversed the direction to select any one of the locating holes 12. Moreover, the aperture marks 13 of the two sets of the locating holes 12 are symmetrically arranged. Even if the gutta-percha point trimmer reverses the direction, the aperture mark 13 of the set of the locating hole 12 that is working is still normally displayed without overturn. Such operation is more visual.

According to the above description, the using effect of the gutta-percha point trimmer 100 gets improved, with the better user experience.

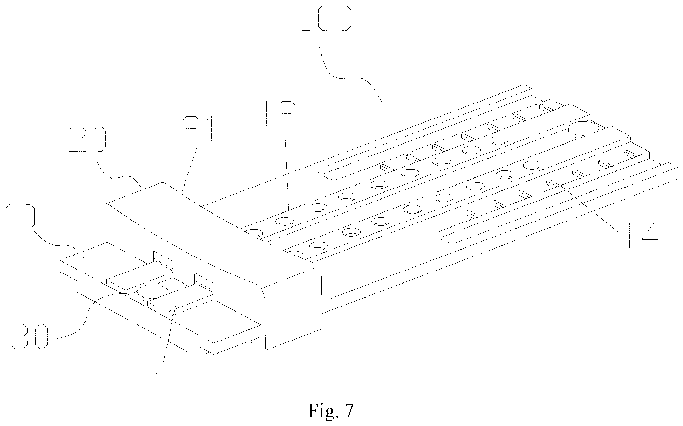

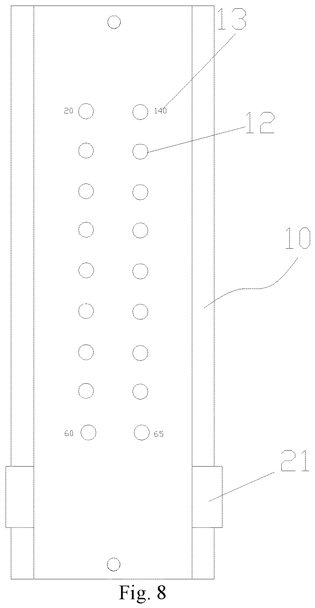

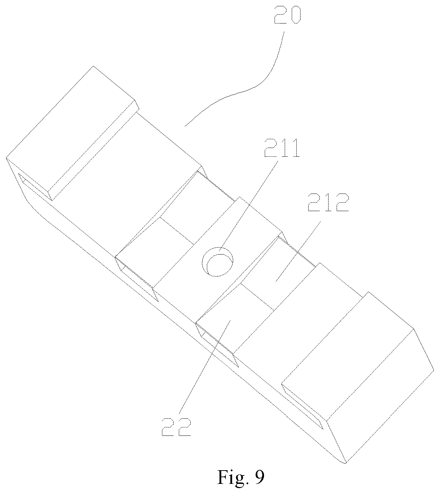

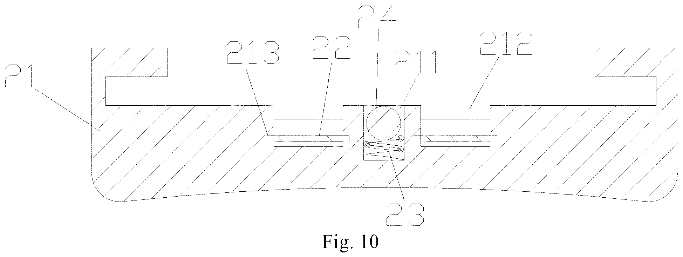

Please refer to Fig. 7, Fig. 8, Fig. 9, Fig. 10 and Fig. 11. It provides a gutta-percha point trimmer 100, comprising a base 10, a sliding block element 20 and a stop block 30, wherein the base 10 is provided with at least one guide rail **11** and the locating holes 12 of various specifications passing through each of the guide rails 11 and the base 10, the sliding block element 20 comprises a sliding block 21 and blades 22, the sliding block 21 is in clearance fit with the base 10, the sliding block 21 slides along the base 10, the sliding block 21 is provided with a counterbore 211 and at least one sliding chute 212, the sliding chute 212 is in clearance fit with the guide rail **11,** the number of the blades 22 is at least two, each of the blades 22 is fixedly connected to the sliding block 21, and is located inside each of the sliding chutes 212, each of the sliding chutes 212 is provided with two blades 22, each of the sliding chutes is provided with two blades, the two blades 22 are symmetrically arranged along the length extension direction of the guide rail 11, the stop block 30 is fixedly connected to the base 10, and is located at both ends of the length extension direction of the base 10.

Further, each of the locating holes 12 is provided with the guide chamber 121 and the measuring chamber 122, wherein the guide chamber 121 is a cylindrical chamber, and the measuring chamber 122 is a tapered chamber.

Further, each of the blades 22 is made of stainless steel, with a thickness of 0.1mm~0.2mm.

Further, the sliding block 21 is provided with an X-shaped chute 213, each of the blades 22 is fixedly connected to the chute 213, and the side of the cutting edge of each of the blades 22 fits closer to the horizontal plane of the guide rail 11, and forms an intersection angle of 25° with the horizontal plane of the guide rail 11.

Further, one end of the said sliding block 21 far away from the guide rail 11 is arranged in a concave arc structure.

Further, the said sliding block element 20 comprises an elastic element 23 and a resisting element 24, wherein one end of the elastic element 23 is fixedly connected to the sliding block 21, the other end of the elastic element 23 is fixedly connected to the resisting element 24, and the elastic element 23 and the resisting element 24 are located inside the counterbore 211.

Further, the outer wall of the said base 10 is provided with the aperture marks 13 and the scale chutes 14, wherein the aperture marks 13 are located at one side of the locating hole 12, each of the locating holes 12 corresponds to one aperture mark 13, and the scale chutes 14 are respectively located at one side of each of the guide rails 11. The base 10 is provided with the two guide rails 11, the sliding block 21 is provided with the two sliding chutes 212, each of the sliding chutes 212 is obliquely provided with the two blades 22, each of the sliding chutes 212 is in clearance fit with corresponding each of the guide rails 11, the locating holes 12 of various specifications are divided into two sets, and the two sets of the locating holes 12 are arranged side by side along the width extension direction of the base 10.

In this implementation mode, the dentist selects a gutta-percha point to be trimmed, determines dimensions of section to be trimmed, rotates the gutta-percha point into the locating hole 12 of corresponding specification, wherein the locating hole 12 has 18 specifications, "20" "25", "30", "35", "40", "45", "50", "55", "60", "65", "70", "80", "90", "100", "110" "120", "130" and "140", which can basically meet the requirements for trimming the gutta-percha points of all specifications. Medical and nursing staff can visually determine the specification of the locating hole 12 by observing the aperture mark 13 on the side of the locating hole 12, and then determine whether to insert the gutta-percha point into the locating hole 12 of such specification. Each of the locating holes 12 is provided with the guide chamber 121 and the measuring chamber 122, wherein the guide chamber 121 is a cylindrical chamber, and the measuring chamber 122 is a tapered chamber. For example: the aperture marks 13 are "20" and "25", indicating the size of the diameter d of the measuring chamber 122 on the bottom surface; in terms of quantity, the aperture mark 13 is equal to 100 multiplied by the diameter d, namely, "20" indicates that d is equal to 0.2mm and "25" indicates that d is equal to 0.25mm. Due to processing difficulty of most gutta-percha point trimmers on the market, the measuring chamber 122 is the thin cylindrical chamber rather than the tapered chamber. However, all the gutta-percha points are tapered. If the measuring chamber 122 is a cylindrical chamber, upon trimming by inserting into the measuring chamber 122, actually cut section diameter is smaller than theoretically trimmed section diameter. There exists an inevitable error. The measuring chamber 122 of the present invention is machined by a custom-made profiling tool with accurate dimensions and high precision, which can ensure accurate dimensions of cutting section.

After the gutta-percha point is inserted into the locating hole 12 of corresponding specification, the sliding block 21 is pushed by hands, so that the sliding block 21 slides on the base 10, the two blades 22 arranged symmetrically on the sliding chute 212 cut off the excess part of the gutta-percha point, and trim the gutta-percha point to the required dimensions, wherein the blades 22, made of stainless steel blades, have a thickness of 0.1mm~0.2mm, and the preferred blades 22 have a thickness of 0.1mm; the blades 22 is extremely sharp, with high hardness and wear resistance. In addition, since the sliding block 21 is provided with an X-shaped chute 213, each of the blades 22 is fixedly connected to the chute 213 by anaerobic adhesive. The anaerobic adhesive can withstand a high temperature of more than 200 degrees; therefore, the gutta-percha point trimmer can be sterilized at high temperature. The side of the cutting edge of each of the blades 22 fits closer to the horizontal plane of the guide rail 11, and forms an intersection angle of 25° with the horizontal plane of the guide rail 11. The plane of the guide rail 11 protrudes from that of the base 10 to achieve separate height increase. The gutta-percha point is cut on the guide rail 11, which can reduce unnecessary contact area of the blades 22 upon cutting, and can make the blades 22 fit closer on the guide rail 11; therefore, the blades 22 can cut off (equivalent to shoveling off) the exposed gutta-percha point along the bottom surface of the locating hole 12 upon working, and the cutting section is very flat. The blade 22 is very thin and sharp; therefore, the gutta-percha point cannot be crushed during cutting, and the cutting section is still round. The two symmetrically-arranged blades 22 can cut, no matter which direction the sliding block 21 moves towards. Moreover, the unexposed cutting edges of the blades 22 are safer and more reliable; the stop block 30 is a limit screw, which can limit the movement of the sliding block 21 to prevent the sliding block 21 from sliding away from the base 10.

By arranging one end of the said sliding block 21 far away from the guide rail 11 in a concave arc structure, the dentist can feel more comfortable and reliable when pressing and moving the sliding block 21. The elastic element 23 is a compressed spring. The resisting element 24 is the steel ball. The sliding block 21 is in clearance fit with the base 10. Upon designing, a small compressed spring can be used in pretightening with the steel ball. The compressed spring is placed into the counterbore 211 on the sliding block 21. The steel ball is placed on the compressed spring. The compression amount of the compressed spring, that is, pretightening force, is determined by the depth of the counterbore 211. After the sliding block 21 is installed on the base 10, the compressed spring and the steel ball are confined in the counterbore 211 of the sliding block 21, and the steel ball is pressed against the plane of the base 10 under the action of the compressed spring. Of course, due to small compression amount of the compressed spring, the pretightening force is very small, which only ensures that the sliding block 21 cannot slide freely on the base 10, without affecting smoothness of movement during work. When the length of the gutta-percha point needs to be measured, the gutta-percha point shall be placed inside the scale chute 14. The length of the gutta-percha point can be easily measured through the scale chute 14 on the base 10.

The said base 10 and the said sliding block 21 are made of aluminum alloy material and have been oxidized. The gutta-percha point trimmer 100, solid and durable, can be sterilized at high temperature. Moreover, it is characterized by light weight, multiple colors and handsome appearance. The entire gutta-percha point trimmer, compact and lightweight, can be operated with one hand; therefore, it is simple and convenient in use. Only one person can complete the trimming of the gutta-percha point, which greatly improves work efficiency.

The said base 10 is provided with the two guide rails 11, the said sliding block 21 is provided with the two sliding chutes 212, each of the sliding chutes 212 is obliquely provided with the two blades 22, each of the sliding chutes 212 is in clearance fit with corresponding each of the guide rails 11, the locating holes 12 of various specifications are divided into two sets, and the two sets of the locating holes 12 are arranged side by side along the width extension direction of the base 10. As a result, the differences between the structure of the gutta-percha point trimmer 100 of the embodiment 3 and the structure of the gutta-percha point trimmer 100 of the embodiment 1 are as follows: the locating holes 12 of 18 different specifications are evenly divided into two sets, each set having 9 specifications; the two sets are arranged side by side on the base 10; therefore, the base 10 in the embodiment 3 is the shortest in the length direction and the widest in the width direction. Since the embodiment has enough space in the width direction, the two scale chutes 14 are symmetrically arranged to facilitate the dentist's operation. No matter which hand holds the trimmer or the gutta-percha point, an appropriate scale chute 14 can be selected for visual measurement. Since the embodiment is provided with the two guide rails 11, namely, the two sliding chutes 212, the two blades 22 are symmetrically arranged on each of the sliding chutes 212, and there are four blades 22 in total; the elastic element 23 and the resisting element 24 are installed between the two sliding chutes 212, namely, between the two guide rails 11, which makes pretightening effect more balanced. The both ends of the two guide rails 11 in the length direction are provided with the stop block 30.

According to the above description, the using effect of the gutta-percha point trimmer 100 gets improved, with the better user experience.

The benefit points of the gutta-percha point trimmer 100 are as follows:
Integrating measuring and cutting functions, it is characterized by simple and convenient operation, high efficiency, compactness and lightness.

The stainless steel blades with a thickness of only 0.1mm are extremely sharp. The blades 22 are obliquely installed, and closely fit the surface of the base 10. The gutta-percha point cannot be flattened upon cutting, ensuring flatness and roundness of the cutting section.

The said blades 22 are obliquely installed inside the sliding block 21 and symmetrically arranged, so that it can cut along the base 10 in both directions at will.

Since the said blades 22 are built inside the sliding block 21, and cannot be touched by fingers, it is very safe and reliable in use.

The said sliding block 21 is in clearance fit with the base 10, and is slightly pre-tightened by the compressed spring and the steel ball, so that the sliding block 21 cannot slide in a free state, but can easily move in a working state.

The said locating hole 12 is composed of the guide chamber 121 and the measuring chamber 122. The measuring chamber 122 is machined by a special profiling tool, which can ensure accurate dimensions.

Therefore, the gutta-percha point trimmer 100 is designed and produced with high precision, which can effectively ensure the trimming precision of the gutta-percha point, and can make the root canal filling easier and more rigorous. The gutta-percha point can be reduced waste of resources by trimming. The roundness of the gutta-percha point can be maintained after the gutta-percha point is cut off by the gutta-percha point trimmer, which can make the filling tighter. It can be sterilized at high temperature and reused. It has accurate dimensions and multiple specifications. It can cut off the gutta-percha point with a light push, which is simple and easy to be used; the metal material is durable and uneasy to be worn, which can improve the using effect with the better user experience.

## Claims

1. A gutta-percha point trimmer (100),
comprising a base (10), a sliding block element (20) and a stop block (30), wherein the base (10) is provided with at least one guide rail (11) and the locating holes (12) of various specifications passing through each of the guide rails (11) and the base (10), the sliding block element (20) comprises a sliding block (21) and blades (22), the sliding block is in clearance fit with the base, the sliding block slides along the base, the sliding block is provided with a counterbore (211) and at least one sliding chute (212), the sliding chute is in clearance fit with the guide rail, the number of the blades is at least two, each of the blades is fixedly connected to the sliding block and is located inside each of the sliding chutes, each of the sliding chutes is provided with two blades arranged symmetrically, which are symmetrically arranged on the sliding chute and along the length extension direction of the guide rail, the stop block is fixedly connected to the base, and is located at both ends of the length extension direction of the base.

2. The gutta-percha point trimmer according to claim 1, **characterized in that**,
each of the locating holes is provided with a guide chamber (121) and a measuring chamber (122), wherein the said guide chamber is a cylindrical chamber, and the said measuring chamber is a tapered chamber.

3. The gutta-percha point trimmer according to claim 2, **characterized in that**,
each of the said blades is made of stainless steel, with a thickness of 0.1mm~0.2mm.

4. The gutta-percha point trimmer according to claim 3, **characterized in that**,
the said sliding block is provided with an X-shaped chute, each of the said blades is fixedly connected to the chute, and the side of the cutting edge of each of the blades fits closer to the horizontal plane of the guide rail and forms an intersection angle of 25° with the horizontal plane of the guide rail.

5. The gutta-percha point trimmer according to claim 4, **characterized in that**,
one end of the said sliding block far away from the guide rail is arranged in a concave arc structure.

6. The gutta-percha point trimmer according to claim 5, **characterized in that**,
the said sliding block element comprises an elastic element and a resisting element, wherein one end of the elastic element is fixedly connected to the sliding block, the other end of the elastic element is fixedly connected to the resisting element, and the elastic element and the resisting element are located inside the counterbore.

7. The gutta-percha point trimmer according to claim 6, **characterized in that**,
the outer wall of the said base is provided with the aperture marks and the scale chutes, wherein the aperture marks are located at one side of the locating hole, each of the locating holes corresponds to one aperture mark, and the scale chutes are respectively located at one side of each of the guide rail.

8. The gutta-percha point trimmer according to claim 7, **characterized in that**,
the said base is provided with the guide rail, the sliding block is provided with the sliding chute, the sliding chute is obliquely provided with the two blades, the sliding chute is in clearance fit with the guide rail, and the locating holes of various specifications are arranged in a row along the length extension direction of the base.

9. The gutta-percha point trimmer according to claim 7, **characterized in that**,
the said base is provided with the guide rail, the sliding block is provided with the sliding chute, the sliding chute is obliquely provided with the two blades, the sliding chute is in clearance fit with the guide rail, and the locating holes of various specifications are divided into two sets, the two sets of the locating holes are respectively arranged at both ends of the base, the two sets of the locating holes are arranged in a row along the length extension direction of the base, and a clearance is reserved between the two sets of the locating holes.

10. The gutta-percha point trimmer according to claim 7, **characterized in that**,
the said base is provided with the two guide rails, the sliding block is provided with the two sliding chutes, each of the sliding chutes is obliquely provided with the two blades, each of the sliding chutes is in clearance fit with corresponding each of the guide rails, the locating holes of various specifications are divided into two sets, and the two sets of the locating holes are arranged side by side along the width extension direction of the base.

## Patentansprüche

1. Ein Guttapercha-Spitzentrimmer (100),
mit einem Sockel (10), einem Gleitblockelement (20) und einem Anschlagblock (30), wobei der Sockel (10) mit mindestens einer Führungsschiene (11) und den durch jede der Führungsschienen (11) und den Sockel (10) verlaufenden Positionierlöchern (12) verschiedener Spezifikationen versehen ist, das Gleitblockelement (20) einen Gleitblock (21) und Klingen (22) umfasst, der Gleitblock in Spielpassung mit dem Sockel ist, der Gleitblock entlang des Sockels gleitet, der Gleitblock mit einer Senkung (211) und mindestens einer Gleitrutsche (212) versehen ist, die Gleitrutsche befindet sich in Spielpassung mit der Führungsschiene, die Anzahl der Lamellen beträgt mindestens zwei, jede der Klingen ist fest mit dem Gleitblock verbunden und befindet sich innerhalb jeder der Gleitrutschen, jede der Gleitrutschen ist mit zwei symmetrisch angeordneten Klingen versehen, die symmetrisch auf der Gleitrutsche und entlang der Längserstreckungsrichtung der Führungsschiene angeordnet sind, der Anschlagblock ist fest mit dem Sockel verbunden und befindet sich an beiden Enden der Längserstreckungsrichtung des Sockels.

2. Guttapercha-Spitzentrimmer nach Anspruch 1, **dadurch gekennzeichnet, dass**,
jedes der Positionierlöcher mit einer Führungskammer (121) und einer Messkammer (122) versehen ist, wobei die Führungskammer eine zylindrische Kammer und die Messkammer eine konische Kammer ist.

3. Guttapercha-Spitzentrimmer nach Anspruch 2, **dadurch gekennzeichnet, dass**,
jedes der besagten Klingen besteht aus rostfreiem Stahl mit einer Dicke von 0,1 mm bis 0,2 mm.

4. Guttapercha-Spitzentrimmer nach Anspruch 3, **dadurch gekennzeichnet, dass**,
der Gleitblock mit einer X-förmigen Rutsche versehen ist, jedes der Klingen fest mit der Rutsche verbunden ist und die Seite der Schneidkante jedes der Klingen näher an der horizontalen Ebene der Führungsschiene liegt und einen Schnittwinkel von 25° mit der horizontalen Ebene der Führungsschiene bildet.

5. Guttapercha-Spitzentrimmer nach Anspruch 4, **dadurch gekennzeichnet, dass**,
ein von der Führungsschiene entferntes Ende des Gleitblocks in einer konkaven Bogenstruktur angeordnet ist.

6. Guttapercha-Spitzentrimmer nach Anspruch 5, **dadurch gekennzeichnet, dass**,
das Gleitblockelement ein elastisches Element und ein Widerstandselement umfasst, wobei ein Ende des elastischen Elements fest mit dem Gleitblock verbunden ist, das andere Ende des elastischen Elements fest mit dem Widerstandselement verbunden ist und das elastische Element und das Widerstandselement innerhalb der Senkung angeordnet sind.

7. Guttapercha-Spitzentrimmer nach Anspruch 6, **dadurch gekennzeichnet, dass**,
die Außenwand dem Sockel mit den Öffnungsmarkierungen und den Skalenrinnen versehen ist, wobei die Öffnungsmarkierungen an einer Seite der Positionierlöcher angeordnet sind, jedes der Positionierlöcher einer Öffnungsmarkierung entspricht und die Skalenrinnen jeweils an einer Seite jeder der Führungsschienen angeordnet sind.

8. Guttapercha-Spitzentrimmer nach Anspruch 7, **dadurch gekennzeichnet, dass**,
der Sockel mit der Führungsschiene versehen ist, der Gleitblock mit der Gleitrutsche versehen ist, die Gleitrutsche schräg mit den beiden Flügeln versehen ist, die Gleitrutsche in Spielpassung mit der Führungsschiene ist, und die Positionierlöcher verschiedener Spezifikationen in einer Reihe entlang der Längsausdehnungsrichtung des Sockels angeordnet sind.

9. Guttapercha-Spitzentrimmer nach Anspruch 7, **dadurch gekennzeichnet, dass**,
der Sockel mit der Führungsschiene versehen ist, der Gleitblock mit der Gleitrutsche versehen ist, die Gleitrutsche schräg mit den beiden Klingen versehen ist, die Gleitrutsche in Spielpassung mit der Führungsschiene ist, und die Positionierlöcher verschiedener Spezifikationen in zwei Sätze unterteilt sind, die beiden Sätze der Positionierlöcher j eweils an beiden Enden des Sockels angeordnet sind, die beiden Sätze der Positionierlöcher in einer Reihe entlang der Längsausdehnungsrichtung des Sockels angeordnet sind, und ein Spiel zwischen den beiden Sätzen der Positionierlöcher reserviert ist.

10. Guttapercha-Spitzentrimmer nach Anspruch 7, **dadurch gekennzeichnet, dass**,
der Sockel mit den beiden Führungsschienen versehen ist, der Gleitblock mit den beiden Gleitrutschen versehen ist, jede der Gleitrutschen schräg mit den beiden Klingen versehen ist, jede der Gleitrutschen in Spielpassung mit jeder der entsprechenden Führungsschienen ist, die Positionierlöcher verschiedener Spezifikationen in zwei Sätze unterteilt sind und die beiden Sätze der Positionierlöcher nebeneinander entlang der Breitenausdehnungsrichtung des Sockels angeordnet sind.

## Revendications

1. Un coupe gutta-percha (100),
constitué d'une base (10), d'un élément à bloc coulissant (20) et d'un bloc de butée (30), dans lequel la base est pourvue d'au moins un rail de guidage (11), et les trous de positionnement (12) de diverses spécifications traversant chacun des rails de guidage (11) et la base (10), l'élément à bloc coulissant (20) comprend un bloc coulissant (21) et des lames (22), le bloc coulissant (22) est ajusté avec un jeu à la base, le bloc coulissant glisse le long de la base, le bloc coulissant est pourvu d'un contre-alésage (211) et d'au moins une goulotte coulissante (212), la goulotte coulissante est ajustée avec un jeu au rail de guidage, le nombre de lames est d'au moins deux, chacune des lames est reliée de manière fixe au bloc coulissant et est située à l'intérieur de chacune des goulottes coulissantes, chacune des goulottes coulissantes est pourvue de deux lames disposées symétriquement, qui sont symétriquement disposées sur la goulotte coulissante et le long de la direction d'extension de la longueur du rail de guidage, le bloc de butée est relié de manière fixe à la base et il est situé aux deux extrémités de la direction d'extension de longueur de la base.

2. Le coupe gutta-percha selon la revendication 1, se **caractérise par le fait que**,
chacun des trous de positionnement est pourvu d'une chambre de guidage (121) et d'une chambre de mesure (122), où la chambre de guidage étant une chambre cylindrique et la chambre de mesure une chambre conique.

3. Le coupe gutta-percha selon la revendication 2, se **caractérise par le fait que**,
chacune de ces lames est en acier inoxydable, d'une épaisseur de 0,1 mm ~ 0,2 mm.

4. Le coupe gutta-percha selon la revendication 3, se **caractérise par le fait que**,
le bloc coulissant est pourvu d'une goulotte en forme de X, chacune des lames est reliée de manière fixe à la goulotte, le côté du bord tranchant de chacune des lames se positionne plus près du plan horizontal du rail de guidage et forme un angle d'intersection de 25° avec le plan horizontal du rail de guidage.

5. Le coupe gutta-percha selon la revendication 4, se **caractérise par le fait que**,
l'une des extrémités de ce bloc coulissant, éloignée du rail de guidage, est disposée en structure d'arc concave.

6. Le coupe gutta-percha selon la revendication 5, se **caractérise par le fait que**,
l'élément à bloc coulissant comprend un élément élastique et un élément résistant, une extrémité de l'élément élastique étant reliée de manière fixe au bloc coulissant, l'autre extrémité de l'élément élastique étant reliée de manière fixe à l'élément résistant, et l'élément élastique et l'élément résistant étant situés à l'intérieur du contre-alésage.

7. Le coupe gutta-percha selon la revendication 6, se **caractérise par le fait que**,
la paroi extérieure de la base est pourvue de marques d'ouverture et de goulottes d'échelle, où les marques d'ouverture sont situées d'un côté du trou de positionnement, chacun des trous de positionnement correspondant à une marque d'ouverture, et les goulottes d'échelle sont respectivement situées d'un côté de chacun des rails de guidage.

8. Le coupe gutta-percha selon la revendication 7, se **caractérise par le fait que**,
la base est pourvue d'un rail de guidage, le bloc coulissant est pourvu d'une goulotte coulissante, la goulotte coulissante est pourvue obliquement de deux lames, la goulotte coulissante est ajustée avec un jeu au rail de guidage, et les trous de positionnement de diverses spécifications sont disposés en rangée le long de la direction d'extension de la longueur de la base.

9. Le coupe gutta-percha selon la revendication 7, se **caractérise par le fait que**,
la base est pourvue d'un rail de guidage, le bloc coulissant est pourvu d'une goulotte coulissante, la goulotte coulissante est pourvue obliquement de deux lames, la goulotte coulissante est ajustée avec un jeu au rail de guidage, les trous de positionnement de diverses spécifications sont divisés en deux unités, les deux unités de trous de positionnement sont respectivement disposées aux deux extrémités de la base, les deux unités de trous de positionnement sont disposées en rangée le long de la direction d'extension de la longueur de la base, et un espace est réservé entre les deux unités de trous de positionnement.

10. Le coupe gutta-percha selon la revendication 7, se **caractérise par le fait que**,
la base est pourvue de deux rails de guidage, le bloc coulissant est pourvu de deux goulottes coulissantes, chacune des goulottes coulissantes est pourvue obliquement de deux lames, chacune des goulottes coulissantes est ajustée avec un jeu à chacun des rails de guidage correspondant, les trous de positionnement de diverses spécifications sont divisés en deux unités, les deux unités de trous de positionnement sont disposées côte à côte le long de la direction de l'extension de la largeur de la base.
